# FASCICULE DE BREVET EUROPEEN

(11) **EP 2 856 733 B1**
(45) Date de publication et mention de la délivrance du brevet: **27.04.2016**
(21) Numéro de dépôt: 13729983.0
(22) Date de dépôt: 17.05.2013
(51) Int. Cl.: H04L 29/06, H04W 12/02, H04M 3/38, H04M 3/42, H04M 3/533

(54) **PROCEDE DE SAUVEGARDE DE L'ANONYMAT LORS D'UNE COMMUNICATION TELEPHONIQUE ET SYSTEME DE TELECOMMUNICATION POUR LA MISE EN OEUVRE DU PROCEDE**
VERFAHREN ZUR BEWAHRUNG DER ANONYMITÄT WÄHREND EINER FERNSPRECHVERBINDUNG UND TELEKOMMUNIKATIONSSYSTEM ZUR DURCHFÜHRUNG DES VERFAHRENS
METHOD OF SAFEGUARDING ANONYMITY DURING A TELEPHONE COMMUNICATION AND TELECOMMUNICATION SYSTEM FOR IMPLEMENTING THE METHOD

(30) Priorité: 24.05.2012 FR 1254800
(43) Date de publication de la demande: 08.04.2015
(73) Titulaire: Orange, 75015 Paris (FR)
(72) Inventeur: MONCOMBLE, Ghislain, F-22300 Lannion (FR); PETESCH, Fabrice, F-22300 Rospez (FR)
(74) Mandataire: Hammes, Pierre
(86) Numéro de dépôt international: PCT/FR2013/051087
(87) Numéro de publication internationale: WO 2013/175108

(56) Documents cités:
- FR-A1- 2 824 981
- US-A1- 2008 025 488
- US-A1- 2010 020 944
- US-B1- 6 970 906

## Description

L'invention concerne le domaine des communications téléphoniques et des services apportés aux usagers d'un réseau de télécommunication.

L'invention a pour objet un procédé permettant de sauvegarder l'anonymat lors d'une communication téléphonique entre un appelant et un destinataire, ainsi qu'un système de télécommunication pour la mise en oeuvre de ce procédé.

Plus précisément, l'invention a pour but de garantir la conservation de l'anonymat du destinataire à toute étape de la communication téléphonique, en particulier lorsque le destinataire est absent et que sa messagerie personnalisée se déclenche.

Différentes méthodes connues permettent de téléphoner à un correspondant qui souhaite conserver, en tout ou partie, son anonymat. Dans un tel scénario, le numéro de téléphone et/ou l'identité réelle du destinataire ne sont pas divulgués à l'appelant qui ne connaît qu'un alias associé à ce destinataire.

Ces procédés, comme celui décrit dans la demande de brevet internationale du demandeur publiée sous le numéro WO 2010/076771, sont basés sur une mise en relation des deux usagers par un tiers de confiance. Ce tiers, qui peut par exemple être l'opérateur téléphonique, dispose des coordonnées du destinataire et a pour rôle d'acheminer la communication sans divulguer à l'appelant les informations relatives à l'identité de ce destinataire.

Cependant, les méthodes connues permettant de préserver l'anonymat du destinataire prennent toutes comme hypothèse que la communication aboutit dans tous les cas, c'est-à-dire que le destinataire est présent et répond à l'appel. Il n'est jamais envisagé que le correspondant puisse être non disponible, absent ou non accessible.

Or, si le correspondant ne répond pas à l'appel, au bout d'une durée paramétrable, son répondeur est en général déclenché et un message d'accueil personnel est joué qui divulgue soit l'identité soit le numéro de téléphone du comespondant. La conservation de l'anonymat est donc rompue dans un tel cas. Le document US2008/0025488A1 décrit un système de communications anonymes permettant d'établir une communication anonyme entre un appelant et un utilisateur apppelé.

Une solution possible à ce problème consiste à faire détecter, par l'opérateur téléphonique, le caractère anonyme de l'appel et à faire jouer un message d'accueil différent du message standard qui ne dévoilerait pas l'identité nl le numéro de téléphone du correspondant. Cependant une telle solution limite le servioe offert aux seuls abonnés de l'opérateur téléphonique en question, ce qui présente un intérêt très limité.

Il existe donc un besoin de garantir la conservation de l'anonymat du destinataire même lorsque sa messagerie vocale se déclenche et quels que soient les opérateurs respectifs de l'appelant et du destinataire.

La présente Invention vise à améliorer la situation. Elle est définie dans les revendications indépendantes 1, 10, 12, 13 14 et 15.

L'invention a ainsi pour objet un procédé de sauvegarde de l'anonymat lors d'une communication vers un destinataire, entre un appelant et un utilisateur appelé, la communication présentant un caractère anonyme, le procédé est caractérisé en ce qu'il comprend les étapes suivantes :
- à la réception d'une réponse du destinataire à la communication émise par rappelant, mise en attente de l'appelant,
- analyse de la réponse reçus du destinataire, pour déterminer si le destinataire correspond à la messagerie vocale de l'utilisateur appelé,
- en cas de détermination positive, diffusion à l'appelant d'un message d'accueil anonyme dans lequel l'identité de l'utilisateur appelé est masqué.

L'invention propose une solution qui ne nécessite aucune modification des infrastructures du système de télécommunications et qui est indépendante du type de communication téléphonique, fixe ou mobile.

L'invention s'applique dans tous les scénarii où l'anonymat du destinataire d'un appel est souhaité, par exemple dans le cadre d'appels entre deux usagers d'un réseau social qui sont identifiés uniquement par un alias.

L'invention permet également d'offrir une solution indépendante d'un opérateur téléphonique.

Dans une variante de réalisation, le procédé selon l'invention comporte en outre les étapes suivantes :
- sauvegarde d'un message déposé par l'appelant en réponse au message d'accueil anonyme,
- transmission d'une indication de présence d'un message déposé par l'appelant à l'utilisateur appelé.

Ainsi, l'appelant a la possibilité de laisser un message à l'utilisateur appelé pour l'informer de la raison de son appel par exemple un appel personnel ou un appel commercial. L'utilisateur appelé qui n'a pas pu prendre la communication anonyme est informé de l'appel par l'indication de présence d'un message.

Selon un aspect particulier de l'invention, lorsque le destinataire a été déterminé comme correspondant à la messagerie vocale de l'utilisateur appelé, la liaison de communication entre l'appelant et le destinataire est interrompue.

Ainsi, les ressources de communication du serveur de messagerie vocale sont optimisées. L'appelant peut alors être en communication avec un autre serveur afin d'écouter un message d'accueil anonyme ou pouvoir déposer un message à l'utilisateur appelé, lorsque ces fonctionnalités ne sont pas mises en oeuvre par le serveur de messagerie vocale. Ce mode de réalisation est avantageux dans le cas où le procédé selon l'invention est mis en oeuvre par un fournisseur de service indépendant de l'opérateur téléphonique de l'utilisateur appelé et/ou de l'appelant.

Selon un autre aspect particulier de l'invention, la mise en attente de l'appelant est mise en oeuvre par la diffusion à l'appelant d'une succession de sonneries spécifiques ou d'un message d'attente spécifique.

L'appelant est alors conscient de la mise en attente et ne risque pas de raccrocher avant d'avoir écouté le message d'accueil anonyme et/ou déposé un message à l'appelé.

Selon un autre aspect particulier de l'invention, la correspondance entre le destinataire et la messagerie vocale de l'utilisateur appelé est déterminée par au moins une des étapes suivantes ou par plusieurs des étapes suivantes mises en oeuvre successivement ou simultanément :
- identification d'un code DTMF spécifique au déclenchement d'une messagerie vocale,
- comparaison d'au moins une partie de la réponse reçue du destinataire avec au moins une partie d'un message d'accueil par défaut de la messagerie vocale d'un opérateur de télécommunications,
- transmission d'un message interactif au destinataire et comparaison de la réponse au message interactif reçue avec une réponse attendue.

Avantageusement, l'utilisation de plusieurs méthodes permet d'accélérer la détermination de la correspondance entre le destinataire et la messagerie vocale de l'utilisateur appelé, diminuant ainsi le temps d'attente de l'appelant.

Selon un autre aspect particulier de l'invention, le message d'accueil anonyme est hébergé sur un serveur distinct du serveur de messagerie vocale de l'utilisateur appelé. Le service de sauvegarde de l'anonymat lors d'une communication anonyme peut ainsi être mis en oeuvre indépendamment de l'opérateur téléphonique de l'appelé. Il peut être mis en oeuvre par n'importe quel fournisseur de service permettant d'établir une communication anonyme avec un correspondant.

Selon un autre aspect particulier de l'invention, l'indication de présence d'un message déposé par l'appelant est communiquée à l'utilisateur appelé par le biais d'un message textuel comportant un lien permettant d'accéder au message déposé par l'appelant.

Avantageusement, l'appelé peut s'il le souhaite consulter le message déposé. Par ce mode de réalisation, lorsque le message déposé est sauvegardé sur un serveur distinct du serveur de messagerie vocale de l'appelé, le message déposé n'utilise pas de ressources du serveur de messagerie vocale. Par exemple, s'il s'agit d'un message à caractère publicitaire, l'utilisateur appelé reste libre de la consultation de ce message.

Selon un autre aspect particulier de l'invention, le message déposé par l'appelant est transmis au serveur de messagerie vocale de l'utilisateur appelé à l'aide d'un mécanisme de simulation d'appel.

Avantageusement, l'utilisateur appelé a ainsi accès à tous ses messages vocaux à partir du seul accès à sa messagerie vocale. Il peut alors bénéficier de toutes les fonctionnalités possibles avec sa messagerie vocale sur ce message déposé, par exemple une visualisation simplifiée du message lorsque son opérateur téléphonique lui propose un service de visualisation de ses messages vocaux.

Selon un autre aspect particulier de l'invention, une information indiquant que la communication est anonyme est insérée dans le message déposé par l'appelant avant transmission à l'utilisateur appelé.

Avantageusement, si l'utilisateur appelé souhaite rappeler l'appelant suite au message déposé, il est informé que son anonymat a été conservé lors de la première communication et peut prendre ses précautions pour le conserver encore lors du rappel.

L'invention a également pour objet un dispositif de sauvegarde de l'anonymat lors d'une communication vers un destinataire, entre un appelant et un utilisateur appelé, la communication présentant un caractère anonyme, le dispositif étant caractérisé en ce qu'il comprend :
- des moyens de réception d'une réponse du destinataire à la communication émise par l'appelant,
- des moyens de mise en attente de l'appelant,
- des moyens d'analyse de la réponse reçue du destinataire, pour déterminer si le destinataire correspond à la messagerie vocale de l'utilisateur appelé,
- des moyens de diffusion à l'appelant d'un message d'accueil anonyme dans lequel l'identité de l'utilisateur appelé est masquée.

Dans une variante de réalisation, le dispositif selon l'invention comprend en outre des moyens de sauvegarde d'un message déposé par l'appelant en réponse au message d'accueil anonyme et des moyens de transmission d'une indication de présence d'un message déposé par l'appelant à l'utilisateur appelé.

L'invention a encore pour objet un serveur comprenant un dispositif selon l'invention et un terminal comprenant un dispositif selon l'invention.

L'invention a encore pour objet un programme d'ordinateur comportant des instructions pour l'exécution du procédé de sauvegarde de l'anonymat selon l'invention, lorsque le programme est exécuté par un processeur.

L'invention a encore pour objet un support d'enregistrement lisible par un processeur sur lequel est enregistré un programme comportant des instructions pour l'exécution du procédé de sauvegarde de l'anonymat selon l'invention, lorsque le programme est exécuté par un processeur.

D'autres caractéristiques et avantages de la présente invention apparaîtront mieux à la lecture de la description qui suit en relation aux dessins annexés qui représentent :
- la figure 1, un organigramme résumant les principales étapes du procédé selon l'invention de sauvegarde de l'anonymat entre un appelant et un destinataire,
- la figure 2, un schéma illustrant la mise en oeuvre du procédé selon l'invention,
- la figure 3, un synoptique d'un dispositif de sauvegarde de l'anonymat comportant des moyens adaptés à la mise en oeuvre du procédé selon l'invention.

Dans la suite de la description, les termes « communication anonyme » et « anonymat » sont utilisés en référence à une communication entre un appelant et un utilisateur appelé pour laquelle le numéro de téléphone et/ou l'identité de l'utilisateur appelé ne sont pas divulgués. Le terme « destinataire » est utilisé indifféremment pour désigner l'utilisateur appelé ou la messagerie vocale de l'utilisateur appelé. On utilise indifféremment les termes « correspondant » ou « utilisateur appelé » pour désigner la personne physique destinataire de l'appel.

Le procédé selon l'invention décrit ci-après vise à conserver l'anonymat d'une communication téléphonique lors de toutes ses étapes de sa mise en oeuvre y compris lorsque des fonctions relatives à la messagerie vocale sont impliquées.

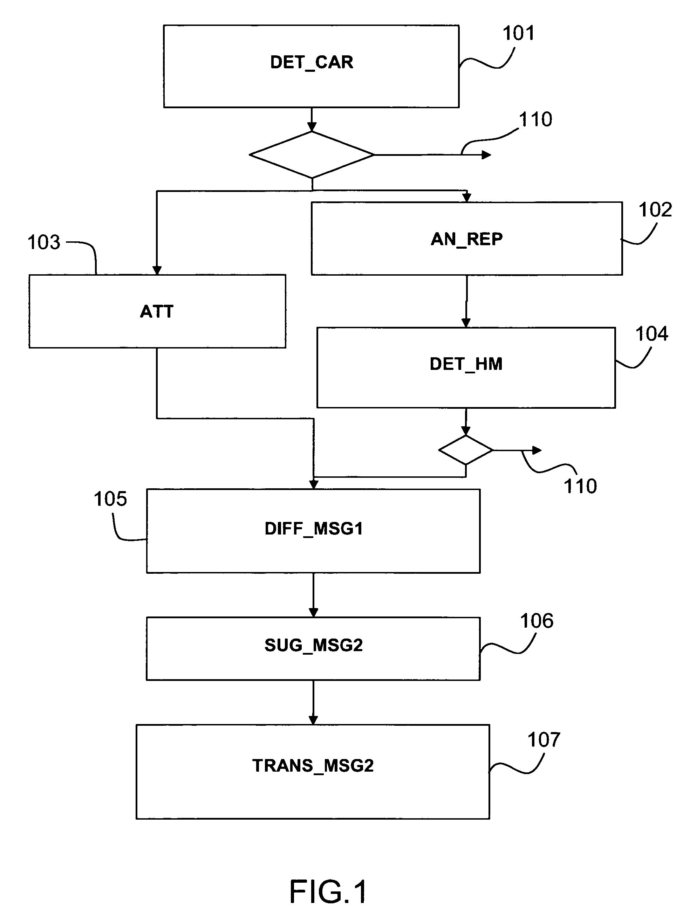

La figure 1 synthétise, sur un organigramme, le séquencement des principales étapes du procédé selon l'invention.

Dans une première étape 101, le caractère anonyme de la communication entre l'appelant et l'utilisateur appelé est déterminé et conservé. Si la communication n'est pas détectée comme anonyme, c'est-à-dire que l'identité de l'utilisateur appelé ne doit pas être gardée secrète vis-à-vis de l'appelant, alors le procédé se termine et une communication 110 classique est établie entre l'appelant et l'utilisateur appelé.

Si au contraire le caractère anonyme de l'appel est détecté, une deuxième étape 102 est exécutée consistant à écouter et analyser la réponse du destinataire pour détecter l'évènement « décroché », autrement dit pour détecter la réception de l'appel.

Dans une troisième étape 103 l'appelant est mis en attente temporairement en masquant la réponse du destinataire à l'appelant, par exemple en diffusant à l'appelant une séquence audio ou un message spécifique pour le faire patienter.

Dans une quatrième étape 104 on détermine le caractère « humain » ou « machine » du destinataire. Autrement dit, on cherche à détecter si l'utilisateur appelé est présent et a bien décroché suite à l'appel reçu ou si au contraire il n'est pas disponible et sa messagerie vocale s'est enclenchée. Si l'utilisateur appelé est présent et répond à l'appel, le procédé se termine et une communication 110 classique est établie entre l'appelant et l'utilisateur appelé.

Si, au contraire, le déclenchement d'une messagerie vocale est détecté, alors les troisième étape 103 et quatrième étape 104 se terminent et une cinquième étape 105 permet de diffuser à l'appelant un message d'accueil spécifique dans lequel l'identité du destinataire est rendue anonyme.
Selon un mode particulier de réalisation de l'invention, lors de l'étape 105, la liaison de communication entre l'appelant et le destinataire est coupée. Selon un autre mode particulier de réalisation de l'invention, suite à l'écoute du message d'accueil rendu anonyme, l'appelant a la possibilité d'enregistrer un message vocal pour l'utilisateur appelé.

Dans une sixième étape 106 optionnelle, si un message vocal est déposé par l'appelant suite à la diffusion du message d'accueil anonyme, ce dernier est sauvegardé.

Enfin dans une dernière étape 107 également optionnelle, le message vocal déposé par l'appelant est communiqué à l'utilisateur appelé en insérant éventuellement un préambule pour alerter le destinataire sur le fait que son identité n'a pas été dévoilée.

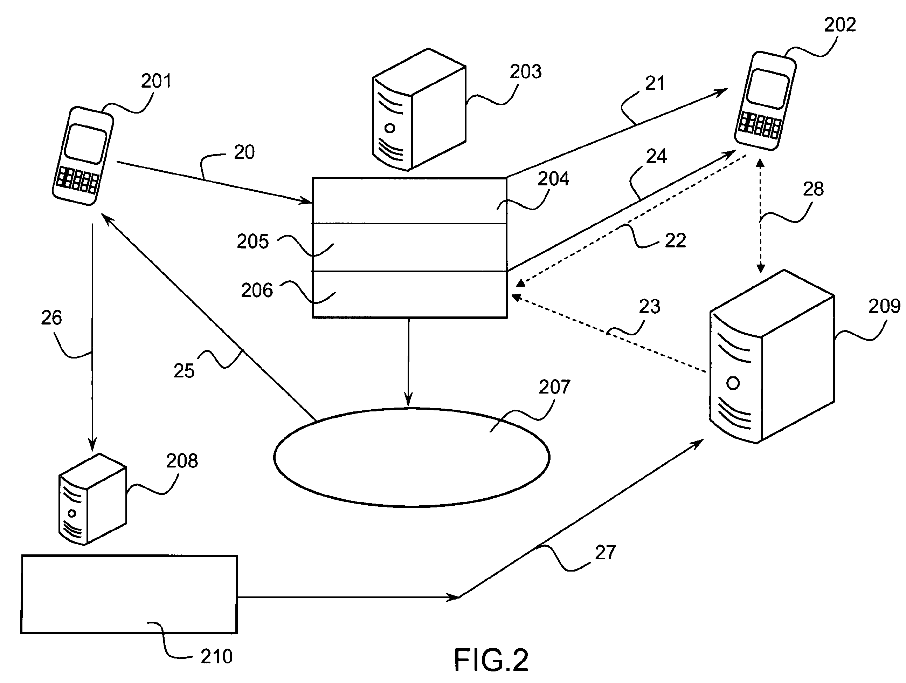

On décrit à présent plus en détail chaque étape du procédé selon l'invention à l'appui de la figure 2 qui illustre, sur un schéma, un exemple de mise en oeuvre de l'invention pour réaliser une communication anonyme entre un appelant et un utilisateur appelé.

Une communication téléphonique est initiée 20 par le terminal 201 de l'appelant. Dans une première étape 101 du procédé selon l'invention, le caractère anonyme de cette communication est détecté. Cette information est connue par défaut lors de l'établissement de l'appel, car cet établissement suit une procédure spécifique. Pour joindre un correspondant sans connaître son numéro de téléphone, un serveur de médiation 203 est utilisé pour intercepter la communication et associer l'identifiant ou l'alias de la personne à joindre à son numéro de téléphone pour ensuite router 21 l'appel vers le terminal destinataire 202 recherché.

En d'autres termes, au niveau de son carnet d'adresses visualisable depuis son terminal 201, par exemple un téléphone mobile, l'appelant ne dispose pas des coordonnées téléphoniques ou même de l'identité réelle du correspondant. Seul un alias figure dans le carnet d'adresses de l'appelant. Lorsque l'appelant veut communiquer avec un correspondant identifié par un alias dans son carnet d'adresses, l'appel est routé 20 vers un serveur de médiation 203 qui met en oeuvre un service de médiation proposé par l'opérateur de télécommunications et qui permet d'associer l'alias du carnet d'adresses au numéro de téléphone du correspondant. Cette association est, par exemple, réalisée en interrogeant une base de données propre à ce service de médiation. L'appel est ensuite routé 21 depuis le serveur de médiation 203 vers le terminal destinataire 202, par exemple le téléphone mobile, du correspondant.

Ainsi, le caractère « anonyme » de la communication est détecté par le serveur de médiation 203 dès qu'il reçoit un appel à destination d'un correspondant identifié par un alias. Cette information est conservée tout au long de la mise en oeuvre du procédé selon l'invention et est associée à la communication.

Dans une variante de réalisation de la première étape 101 du procédé selon l'invention, les informations relatives aux coordonnées téléphoniques du correspondant identifié par un alias sont disponibles dans le carnet d'adresses de l'appelant mais ces informations sont masquées de sorte à ne pas être divulguées à l'appelant. Le caractère « anonyme » de la communication est associé à l'appel dès la sélection de l'alias du correspondant dans le carnet d'adresses et est détecté par l'opérateur de télécommunications lors de l'établissement de la communication. Dans cette variante, le serveur de médiation 203 n'est pas nécessaire.

Selon un mode particulier de réalisation de l'invention, l'information concernant l'anonymat de la communication est sauvegardée sur un serveur appartenant à l'opérateur du service et n'a pas besoin d'être communiquée au terminal destinataire 202.

Selon un autre mode particulier de réalisation de l'invention, l'information concernant l'anonymat de la communication est transmise au terminal destinataire 202 ou à une passerelle (non représentée) de communication domestique permettant au terminal destinataire 202 d'accéder au réseau de télécommunications. Ainsi, dans ce mode particulier de réalisation, le terminal 202 ou la passerelle peuvent mettre en oeuvre le procédé de sauvegarde de l'anonymat selon l'invention.

Si la communication n'est pas anonyme, l'appel se poursuit selon une procédure classique qui ne fait pas l'objet de la présente invention.

Dans une deuxième étape 102 du procédé selon l'invention, un premier moyen 204 d'écoute et d'analyse est activé afin de déterminer la réponse attendue 22,23 du correspondant suite à l'établissement de la communication par l'appelant.

Ce premier moyen 204 d'écoute et d'analyse peut être implémenté sur le serveur de médiation 203, sur un serveur centralisé dans le réseau de l'opérateur ou sur un serveur spécifique dédié à la mise en oeuvre du procédé selon l'invention. Il peut également être implémenté directement sur le terminal 201 de l'appelant sous forme d'une application logicielle.

Le premier moyen 204 d'écoute et d'analyse a pour fonction la détection de l'événement « décroché » du correspondant de l'appel. Autrement dit, il s'agit ici de détecter l'instant à partir duquel la réception de l'appel a lieu et la communication entre l'appelant et le correspondant est établie.

Le plus souvent, l'évènement « décroché » se caractérise par l'émission automatique d'un code DTMF (Dual Tone Multi Frequency) spécifique. Un code DTMF correspond à une combinaison de fréquences spécifiques. Le premier moyen 204 d'écoute et d'analyse consiste dans ce cas à écouter la réponse 22,23 du correspondant et à identifier le code DTMF émis suite au décroché. Pour cela, par exemple, une comparaison de la réponse du correspondant avec une séquence audio préenregistrée peut être mise en oeuvre afin de détecter la présence du code DTMF dans la réponse reçue et analysée.

Lorsque le correspondant n'est pas disponible et que sa messagerie se déclenche suite à l'événement « décroché », son identité risque d'être divulguée à l'appelant si le message d'accueil de la messagerie de l'utilisateur appelé est diffusée à l'appelant.

Pour éviter cette perte d'anonymat, dans une troisième étape 103 du procédé selon l'invention, un deuxième moyen 205 est mis en oeuvre pour masquer temporairement à l'appelant la réponse du destinataire qui risque de consister en le début de son message d'accueil. Autrement dit, la troisième étape 103 du procédé consiste à mettre en attente l'appelant 201. Cette troisième étape 103 peut être déclenchée dès l'initiation de la communication, en parallèle de la deuxième étape 102 ou successivement à la deuxième étape 102 une fois que l'évènement « décroché » a été détecté.

Dans une première variante de la troisième étape 103 du procédé selon l'invention, le deuxième moyen 205 consiste à masquer à l'appelant l'événement « décroché » du destinataire de sorte que l'appelant a l'impression que le terminal 202 de son correspondant continue à sonner. Pour cela, dès que le caractère anonyme de la communication est établi, le deuxième moyen 205 diffuse à l'appelant une bande sonore constituée de sonneries spécifiques.

Dans une seconde variante de la troisième étape 103 du procédé selon l'invention, l'appelant entend le code lui indiquant que la communication avec son destinataire est établie, mais la sonnerie continue sur une autre tonalité, lui indiquant qu'il n'a pas encore la main.

Pour cela, suite à la détection de l'événement « décroché », le deuxième moyen 205 diffuse à destination exclusive de l'appelant une bande sonore correspondant à une nouvelle succession de sonneries spécifique. Le canal de communication entre l'appelant et le destinataire est alors momentanément coupé. La succession de sonneries spécifique peut aussi être remplacée par un message spécifique du type « ne raccrochez pas, nous identifions votre correspondant » afin de faire patienter l'appelant qui est conscient du caractère anonyme de la communication.

De la même façon que le premier moyen 204 d'écoute et d'analyse, le deuxième moyen 205 peut être implémenté sur le serveur de médiation 203, sur un serveur centralisé dans le réseau de l'opérateur, sur un serveur spécifique dédié à la mise en oeuvre du procédé selon l'invention ou encore directement sur le terminal 201 de l'appelant sous la forme d'une application logicielle.

Dans une quatrième étape 104 du procédé selon l'invention, la réponse de l'appelant est analysée afin de déterminer si elle correspond à un décroché du correspondant 22 ou à un déclenchement de sa messagerie vocale 23. Cette étape d'analyse 104 est réalisée simultanément à la troisième étape 103 de mise en attente de l'appelant par masquage de la réponse du correspondant à l'appelant et aboutit à la définition d'un état « humain » ou « machine » associé au destinataire de l'appel suite au décroché. Elle peut être mise en oeuvre par un troisième moyen 206 d'analyse ou directement par le premier moyen 204 d'écoute et d'analyse selon la variante de réalisation sélectionnée.

Plusieurs solutions sont possibles pour détecter le déclenchement d'une messagerie vocale.

Dans une première variante de réalisation de la quatrième étape 104 du procédé selon l'invention, certaines implémentations de messageries vocales intègrent un code DTMF ou équivalent spécifique qui est joué systématiquement au déclenchement de la messagerie. Cette implémentation dépend de l'opérateur téléphonique. Dans ce cas, la détection du déclenchement de la messagerie peut se faire en identifiant le code associé à la messagerie. Cette étape peut être mise en oeuvre par un troisième moyen 206 d'analyse spécifique ou par le premier moyen 204 d'écoute et d'analyse qui détecte le code DTMF joué dans la réponse du correspondant et identifie si ce code correspond à un décroché ou au déclenchement de la messagerie vocale. Si le code recherché n'est pas perçu dans un délai prédéterminé, par exemple égal à une seconde, suite au décroché, l'état « humain » est associé au destinataire, le procédé selon l'invention est alors interrompu et la liaison entre l'appelant et le correspondant est automatiquement établie.

Cependant, selon l'opérateur téléphonique considéré, le déclenchement de la messagerie vocale n'entraîne pas systématiquement la diffusion d'un code DTMF ou équivalent spécifique.

Dans une deuxième variante de réalisation de la quatrième étape 104 du procédé selon l'invention, une reconnaissance du message d'accueil par défaut du destinataire est mise en oeuvre. Les opérateurs téléphoniques correspondant à chaque numéro de destinataire potentiel sont prédéterminés, par exemple à partir de l'allocation des plages de numéros par opérateur dans un pays donné et le message d'accueil par défaut de la messagerie vocale de chaque opérateur est conservé sur un espace de stockage accessible au premier moyen 204 d'écoute et d'analyse. Une analyse de la réponse du destinataire est effectuée sur une durée prédéterminée, par exemple égale à quelques secondes, pour comparer cette réponse avec chaque message d'accueil par défaut sauvegardé. Cette comparaison audio peut être réalisée à l'aide de techniques connues de l'état de l'art. En cas de similitude entre la portion de réponse analysée et l'un des messages d'accueil par défaut sauvegardés, le troisième moyen d'analyse 206 conclut au déclenchement d'une messagerie vocale. Dans le cas contraire, il conclut sur l'état « humain » du destinataire.

Dans une troisième variante de réalisation de la quatrième étape 104 du procédé selon l'invention, l'état « humain » du destinataire est déterminé en introduisant une interaction entre le troisième moyen d'analyse 206 et le correspondant. Cette interaction est mise en oeuvre de la façon suivante.

Dès que l'évènement « décroché » est détecté, un message automatique demandant une interaction est joué au correspondant. Par exemple ce message peut être du type « prenez vous cet appel anonyme ? Répondez par oui ou par non ». La réponse du correspondant est ensuite analysée, par exemple par reconnaissance vocale, pour déterminer la réponse « oui » ou « non » du correspondant ou l'absence de réponse.

Si la réponse « oui » est détectée, le procédé se termine automatiquement et la communication entre l'appelant et le correspondant est établie.

Si aucune réponse n'est détectée au bout d'une durée prédéterminée par exemple égale à quatre secondes, ou si la réponse « non » est détectée, le procédé se poursuit.

Tout autre message interactif nécessitant de la part du correspondant une réponse binaire « oui » ou « non » est envisageable. Au lieu d'une réponse vocale, la réponse attendue peut également consister, pour le correspondant, à composer un code DTMF spécifique qui est associé à l'état « humain » du destinataire.

La durée pendant laquelle la réponse du destinataire est masquée à l'appelant correspond à la durée de détermination du caractère humain ou machine du correspondant. Autrement dit, la troisième étape 103 se termine en même temps que la quatrième étape 104. Il est important que cette durée soit la plus courte possible pour que le procédé selon l'invention se termine avant le déclenchement de l'enregistrement du message sur la messagerie du correspondant.

Pour minimiser la durée nécessaire pour détecter le déclenchement de la messagerie vocale, les trois variantes de réalisation décrites ci-dessus peuvent être mises en oeuvre simultanément afin d'optimiser le temps d'exécution du procédé. Dans ce cas, le troisième moyen 206 d'analyse peut mettre en oeuvre les trois variantes en parallèle et la première d'entre elles qui aboutit à un résultat sur l'état du correspondant prend la main sur les autres.

En particulier, il est envisageable que la diffusion d'un code DTMF spécifique de déclenchement de la messagerie vocale soit systématique et que la détection de ce code permette de déterminer le caractère « machine » du correspondant de façon certaine et rapide. Dans le cas où un tel code n'est pas prévu par l'opérateur téléphonique, les deux autres variantes de réalisation peuvent s'avérer utiles.

Pour améliorer encore l'efficacité du procédé et déterminer au préalable laquelle des trois variantes de réalisation est la plus adaptée au cas d'espèce, il faut connaître à l'avance le type d'implémentation de messagerie vocale de l'opérateur téléphonique dans le cas d'une communication entre un appelant et un correspondant abonnés à des opérateurs différents. Cette information est stockée dans une base de données accessible au service de communication anonyme et mise en relation avec chaque coordonnée téléphonique de chaque destinataire potentiel. Dans ce cas, dès l'établissement de l'appel, il est possible de savoir si la messagerie vocale du destinataire utilise un code DTMF spécifique et lequel.

Si l'état « humain » du destinataire est détecté, l'appelant et le correspondant sont mis en relation 24 et la communication se poursuit de façon classique.

Si l'état « machine » est détecté signifiant que la messagerie vocale du correspondant s'est déclenchée, alors, dans une cinquième étape 105 du procédé selon l'invention, la liaison de communication entre l'appelant et le destinataire est définitivement coupée et un message d'accueil spécifique 207 est diffusé 25 à l'appelant pour l'inviter à déposer un message vocal à destination de son correspondant anonyme. Le message spécifique 207 est conçu pour préserver l'anonymat du correspondant. Il peut consister en un message par défaut mais le service de communication anonyme peut également disposer d'interfaces permettant à chaque personne de créer son propre message d'accueil anonyme, charge alors à cette personne de ne pas dévoiler son identité. Le serveur hébergeant le message d'accueil anonyme 207 peut être, selon les implémentations, soit le serveur de médiation 203, soit un serveur autonome spécifique 208 qui stocke également le message vocal de l'appelant à destination du correspondant, si l'appelant décide de laisser un tel message.

Suite à l'écoute du message d'accueil du service de mise en communication anonyme et selon une sixième étape 106 du procédé selon l'invention, l'appelant peut donc décider de déposer 26 un message vocal ou textuel à destination de son correspondant. Ce message est enregistré sur un serveur spécifique 208, ou sur le serveur de médiation 203, pour être ensuite transmis 27 au destinataire dans une dernière étape 107 du procédé selon l'invention. Si le message est textuel, il peut être composé à partir du terminal de l'appelant ou transcrit par le serveur recevant le message vocal de l'appelant.

Dans une première variante de réalisation de la dernière étape 107 du procédé selon l'invention, le message enregistré par l'appelant est communiqué au correspondant par le biais d'un message textuel SMS qui contient un lien hypertexte permettant d'écouter le message et éventuellement de rappeler de façon anonyme son correspondant. A la place d'un message SMS, un courriel peut également être envoyé au correspondant contenant également un lien hypertexte permettant d'écouter le message de l'appelant, charge au destinataire de rappeler ensuite l'appelant par la méthode de son choix.

Dans une deuxième variante de réalisation de la dernière étape 107 du procédé selon l'invention, le message vocal déposé par l'appelant est conservé au sein d'un système de messagerie vocale complet faisant partie intégrante du service de communication anonyme. Ainsi, le système de messagerie anonyme peut être appelé pour mettre à jour le message d'accueil anonyme et pour consulter les messages laissés par l'appelant. La consultation de cette messagerie se fait à l'aide d'un numéro spécifique.

Dans une troisième variante de réalisation de la dernière étape 107 du procédé selon l'invention, le message enregistré par l'appelant est recopié 27 vers le serveur 209 de messagerie vocale personnelle du correspondant, sans faire sonner le téléphone de ce dernier. Cette recopie est effectuée en utilisant un mécanisme de dépôt de boîte à boîte. Un tel mécanisme peut être mis en oeuvre pour chaque opérateur téléphonique en utilisant les interfaces de programmation fournies afin d'accéder au mécanisme de mise à jour directe de la messagerie.

Pour ne pas dépendre de l'accès aux interfaces de programmation de chaque opérateur téléphonique, une autre solution consiste à implémenter un mécanisme de simulation d'appel qui consiste à simuler un appel vers le numéro de service de mise à jour directe de la messagerie du correspondant pour ensuite recopier le message sauvegardé sur le serveur spécifique 208 vers la messagerie vocale du correspondant.

Un tel mécanisme de simulation consiste à composer le numéro de téléphone du service concerné de l'opérateur visé puis à composer la série des différents codes DTMF permettant d'accéder à la fonction de dépôt d'un message, en respectant les séquences attendues telles qu'indiquées par le serveur vocal interactif du service de l'opérateur, puis à lire le message vocal de l'appelant précédemment sauvegardé et enfin à valider celui-ci.

L'avantage de cette variante de l'invention consiste pour le correspondant à disposer de tous ses messages sur une seule messagerie vocale accessible à partir d'un unique numéro de messagerie et donc sans aucune opération spécifique à réaliser pour l'utilisateur. Le correspondant 102 peut par la suite consulter 28 le message déposé par l'appelant 201 sur sa messagerie personnelle 209.

Dans le cas où, suite à la lecture du message de l'appelant, le correspondant souhaite le rappeler directement, sans utiliser de service de communication anonyme, alors son anonymat ne sera plus préservé car son numéro de téléphone peut s'afficher sur le terminal récepteur de l'appel.

Pour éviter ce problème et renforcer encore la préservation de l'anonymat, lors de la transmission du message vocal de l'appelant de boîte à boîte, le numéro de téléphone de l'appelant est masqué ou remplacé par un identifiant générique du type « appel anonyme ». Une telle fonctionnalité est facilitée par l'utilisation d'un mécanisme de transfert de boîte à boîte car l'appel provient physiquement du serveur 208,203 dans lequel le message vocal est pré-enregistré et une identification de type « message anonyme » peut être attribuée audit serveur 208,203. D'autre part, une phrase générique en synthèse vocale peut également être rajoutée au message vocal de l'appelant, par exemple au début du message, indiquant au correspondant que le message est anonyme et que pour répondre à l'appelant sans dévoiler son identité, il convient d'utiliser l'application associée au service de communication anonyme, c'est-à-dire qui met en oeuvre le procédé selon l'invention. Ce prétraitement 210 du message vocal enregistré par l'appelant peut être réalisé directement par le serveur autonome 208,203.

De cette façon, le procédé selon l'invention permet de garantir la conservation de l'anonymat d'une communication de bout en bout.

Comme explicité ci-dessus, l'invention peut être mise en oeuvre par des moyens intégrés dans un seul et même serveur 203 ou dans plusieurs serveurs distincts 203,208 ou encore dans le terminal de l'appelant 201 et dans un serveur de sauvegarde 208, ou dans une passerelle domestique connectée au terminal de l'utilisateur appelé 202.

Le procédé selon l'invention peut être implémenté à partir d'éléments matériel et/ou logiciel. Il peut notamment être mis en oeuvre en tant que programme d'ordinateur comportant des instructions pour son exécution. Le programme d'ordinateur peut être enregistré sur un support d'enregistrement lisible par un processeur.

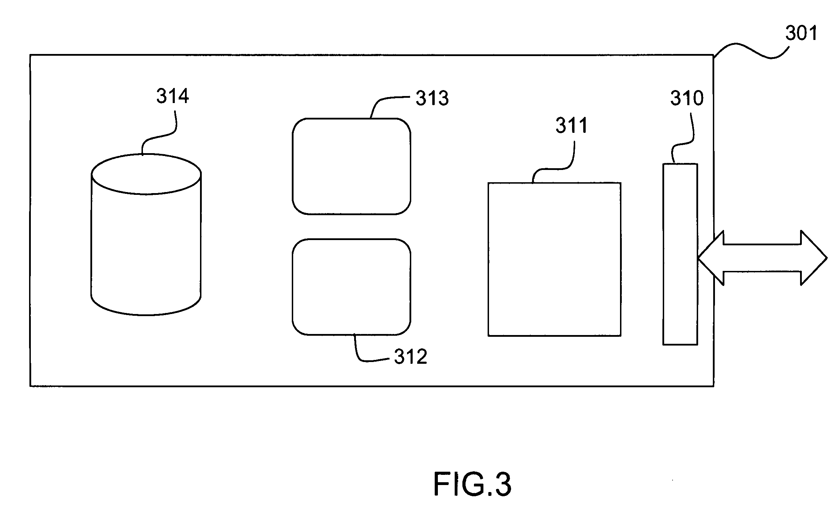

La figure 3 représente un synoptique d'un dispositif 301, selon l'invention, de sauvegarde de l'anonymat lors d'une communication vers un destinataire.

Un tel dispositif 301 comporte au moins des moyens de communication 310, par exemple une interface réseau, un processeur 311 pour exécuter les instructions du programme d'ordinateur afin de mettre en oeuvre le procédé selon l'invention, une mémoire 312 pour stocker les instructions du programme, une mémoire vive 313 pour l'exécution du programme et un moyen 314 de stockage d'un message anonyme, par exemple une mémoire de stockage.

Le dispositif 301 selon l'invention est avantageusement hébergé dans un serveur de médiation 203 spécifique à l'invention.

## Revendications

1. Procédé de sauvegarde de l'anonymat lors d'une communication vers un destinataire (202,209), entre un appelant (201) et un utilisateur appelé (202), la communication présentant un caractère anonyme, le procédé est **caractérisé en ce qu'**il comprend les étapes suivantes :
- à la réception d'une réponse du destinataire (202,209) à la communication émise par l'appelant (201), mise en attente (103) de l'appelant (201),
- simultanément à la mise en attente de l'appelant, analyse (102) de la réponse reçue du destinataire (202,209), pour déterminer (104) si le destinataire (202,209) correspond à la messagerie vocale (209) de l'utilisateur appelé (202),
- en cas de détermination positive, diffusion (105) à l'appelant (201) d'un message d'accueil anonyme (207) dans lequel l'identité de l'utilisateur appelé (202) est masquée.

2. Procédé selon la revendication 1 comportant en outre les étapes suivantes :
- sauvegarde (106) d'un message déposé par l'appelant (201) en réponse au message d'accueil anonyme,
- transmission (107) d'une indication de présence d'un message déposé par l'appelant (201) à l'utilisateur appelé (202).

3. Procédé selon l'une des revendications 1 ou 2 dans lequel quand le destinataire (202,209) a été déterminé comme correspondant à la messagerie vocale (209) de l'utilisateur appelé (202), la liaison de communication entre l'appelant (201) et le destinataire (202,209) est interrompue.

4. Procédé selon l'une quelconque des revendications 1 à 3, dans lequel la mise en attente (103) de l'appelant (201) est mise en oeuvre par la diffusion à l'appelant (201) d'une succession de sonneries spécifiques ou d'un message d'attente spécifique.

5. Procédé selon l'une quelconque des revendications précédentes dans lequel la correspondance entre le destinataire (202,209) et la messagerie vocale (209) de l'utilisateur appelé (202) est déterminée (104) par au moins une des étapes suivantes :
- identification d'un code DTMF spécifique au déclenchement d'une messagerie vocale,
- comparaison d'au moins une partie de la réponse reçue du destinataire avec au moins une partie d'un message d'accueil par défaut de la messagerie vocale d'un opérateur de télécommunications,
- transmission d'un message interactif au destinataire et comparaison de la réponse au message interactif reçue avec une réponse attendue.

6. Procédé selon l'une des revendications précédentes dans lequel le message d'accueil anonyme (207) est hébergé sur un serveur distinct (208) du serveur de messagerie vocale (209) de l'utilisateur appelé (202).

7. Procédé selon l'une quelconque des revendications 2 à 6 dans lequel l'indication de présence d'un message déposé par l'appelant (201) est communiquée à l'utilisateur appelé (202) par le biais d'un message textuel comportant un lien permettant d'accéder au message déposé par l'appelant (201).

8. Procédé selon l'une quelconque des revendications 2 à 6 dans lequel le message déposé par l'appelant (201) est transmis au serveur de messagerie vocale (209) de l'utilisateur appelé (202) à l'aide d'un mécanisme de simulation d'appel.

9. Procédé selon l'une quelconque des revendications 2 à 8 dans lequel une information indiquant que la communication est anonyme est insérée dans le message déposé par l'appelant (201) avant transmission à l'utilisateur appelé (202).

10. Dispositif de sauvegarde de l'anonymat lors d'une communication vers un destinataire, entre un appelant (201) et un utilisateur appelé (202), la communication présentant un caractère anonyme, le dispositif est **caractérisé en ce qu'**il comprend :
- des moyens de réception (204) d'une réponse du destinataire (202,209) à la communication émise par l'appelant (201),
- des moyens (205) de mise en attente de l'appelant (201) activés à la réception de la réponse du destinataire,
- des moyens (206) d'analyse de la réponse reçue du destinataire (202.209), pour déterminer si le destinataire correspond à la messagerie vocale (209) de l'utilisateur appelé (202), les moyens d'analyse étant activés simultanément à la mise en attente de l'appelant,
- des moyens de diffusion à l'appelant (201) d'un message d'accueil anonyme (207) dans lequel l'identité de l'utilisateur appelé (202) est masquée, les moyens de diffusion étant activés dans le cas d'une détermination positive.

11. Dispositif selon la revendication 10 comprenant des moyens de sauvegarde (208,203) d'un message déposé par l'appelant (201) en réponse au message d'accueil anonyme et des moyens de transmission (27) d'une indication de présence d'un message déposé par l'appelant (201) à l'utilisateur appelé (202).

12. Serveur comprenant un dispositif selon l'une quelconque des revendications 10 ou 11.

13. terminal comprenant un dispositif selon la revendication 10.

14. Programme d'ordinateur comportant des instructions pour l'exécution du procédé de sauvegarde de l'anonymat selon l'une quelconque des revendications 1 à 9, lorsque le programme est exécuté par un processeur.

15. Support d'enregistrement lisible par un processeur sur lequel est enregistré un programme comportant des instructions pour l'exécution du procédé de sauvegarde de l'anonymat selon l'une quelconque des revendications 1 à 9, lorsque le programme est exécuté par un processeur.

## Patentansprüche

1. Verfahren zum Sichern der Anonymität bei einer Gesprächsverbindung zu einem Empfänger (202, 209), zwischen einem anrufenden Teilnehmer (201) und einem angerufenen Benutzer (202), wobei die Gesprächsverbindung anonym ist, wobei das Verfahren **dadurch gekennzeichnet ist, dass** es die folgenden Schritte enthält:
- bei Empfang einer Antwort des Empfängers (202, 209) auf die vom anrufenden Teilnehmer (201) gesendete Gesprächsverbindung, Bringen (103) des anrufenden Teilnehmers (201) in Wartestellung,
- gleichzeitig mit dem Bringen des anrufenden Teilnehmers in Wartestellung, Analyse (102) der vom Empfänger (202, 209) empfangenen Antwort, um festzustellen (104), ob der Empfänger (202, 209) der Voicemail (209) des angerufenen Benutzers (202) entspricht,
- im Fall einer positiven Feststellung, Aussenden (105) einer anonymen Begrüßungsmitteilung (207) an den anrufenden Teilnehmer (201), in der die Identität des angerufenen Benutzer (202) maskiert ist.

2. Verfahren nach Anspruch 1, das außerdem die folgenden Schritte aufweist:
- Sichern (106) einer vom anrufenden Teilnehmer (201) als Antwort auf die anonyme Begrüßungsmitteilung hinterlegten Mitteilung,
- Übertragen (107) eines Hinweises auf das Vorhandensein einer vom anrufenden Teilnehmer (201) hinterlegten Mitteilung an den angerufenen Benutzer (202).

3. Verfahren nach einem der Ansprüche 1 oder 2, wobei, wenn der Empfänger (202, 209) als der Voicemail (209) des angerufenen Benutzers (202) entsprechend festgestellt wurde, die Gesprächsverbindung zwischen dem anrufenden Teilnehmer (201) und dem Empfänger (202, 209) unterbrochen wird.

4. Verfahren nach einem der Ansprüche 1 bis 3, wobei das Bringen (103) des anrufenden Teilnehmers (201) in Wartestellung durch das Aussenden einer Folge von speziellen Klingeltönen oder einer speziellen Wartemitteilung an den anrufenden Teilnehmer (201) durchgeführt wird.

5. Verfahren nach einem der vorhergehenden Ansprüche, wobei die Entsprechung zwischen dem Empfänger (202, 209) und der Voicemail (209) des angerufenen Benutzers (202) durch mindestens einen der folgenden Schritte festgestellt wird (104):
- Identifizierung eines für das Auslösen einer Voicemail spezifischen DTMF-Codes,
- Vergleich mindestens eines Teils der vom Empfänger empfangenen Antwort mit mindestens einem Teil einer Standard-Begrüßungsmitteilung der Voicemail eines Telekommunikationsanbieters,
- Übertragung einer interaktiven Mitteilung an den Empfänger und Vergleich der empfangenen Antwort auf die interaktive Mitteilung mit einer erwarteten Antwort.

6. Verfahren nach einem der vorhergehenden Ansprüche, wobei die anonyme Begrüßungsmitteilung (207) auf einem Server (208) untergebracht ist, der sich vom Voicemail-Server (209) des angerufenen Benutzers (202) unterscheidet.

7. Verfahren nach einem der Ansprüche 2 bis 6, wobei der Hinweis auf das Vorhandensein einer vom anrufenden Teilnehmer (201) hinterlegten Mitteilung dem angerufenen Benutzer (202) mittels einer Textmitteilung übermittelt wird, die einen Link enthält, der es ermöglicht, auf die vom anrufenden Teilnehmer (201) hinterlegte Mitteilung zuzugreifen.

8. Verfahren nach einem der Ansprüche 2 bis 6, wobei die vom anrufenden Teilnehmer (201) hinterlegte Mitteilung an den Voicemail-Server (209) des angerufenen Benutzers (202) mit Hilfe eines Anrufsimulationsmechanismus übertragen wird.

9. Verfahren nach einem der Ansprüche 2 bis 8, wobei eine Information, die anzeigt, dass die Gesprächsverbindung anonym ist, in die vom anrufenden Teilnehmer (201) hinterlegte Mitteilung vor der Übertragung an den angerufenen Benutzer (202) eingefügt wird.

10. Vorrichtung zum Sichern der Anonymität bei einer Gesprächsverbindung zu einem Empfänger, zwischen einem anrufenden Teilnehmer (201) und einem angerufenen Benutzer (202), wobei die Gesprächsverbindung anonym ist, wobei die Vorrichtung **dadurch gekennzeichnet ist, dass** sie enthält:
- Empfangseinrichtungen (204) einer Antwort des Empfängers (202, 209) auf die vom anrufenden Teilnehmer (201) gesendete Gesprächsverbindung,
- Einrichtungen (205) zum Bringen des anrufenden Teilnehmers (201) in Wartestellung, die bei Empfang der Antwort des Empfängers aktiviert werden,
- Einrichtungen (206) zur Analyse der vom Empfänger (202, 209) empfangenen Antwort, um festzustellen, ob der Empfänger der Voicemail (209) des angerufenen Benutzers (202) entspricht, wobei die Analyseeinrichtungen gleichzeitig mit dem Bringen des anrufenden Teilnehmers in Wartestellung aktiviert werden,
- Einrichtungen zur Aussendung einer anonymen Begrüßungsmitteilung (207) an den anrufenden Teilnehmer (201), wobei die Identität des angerufenen Benutzers (202) maskiert ist, wobei die Aussendungseinrichtungen im Fall einer positiven Feststellung aktiviert werden.

11. Vorrichtung nach Anspruch 10, die Einrichtungen zum Sichern (208, 203) einer vom anrufenden Teilnehmer (201) als Antwort auf die anonyme Begrüßungsmitteilung hinterlegten Mitteilung und Einrichtungen zum Übertragen (27) eines Hinweises auf das Vorhandensein einer vom anrufenden Teilnehmer (201) hinterlegten Mitteilung an den angerufenen Benutzer (202) enthält.

12. Server, der eine Vorrichtung nach einem der Ansprüche 10 oder 11 enthält.

13. Endgerät, das eine Vorrichtung nach Anspruch 10 enthält.

14. Computerprogramm, das Anweisungen zur Ausführung des Verfahrens zum Sichern der Anonymität nach einem der Ansprüche 1 bis 9 aufweist, wenn das Programm von einem Prozessor ausgeführt wird.

15. Prozessorlesbarer Aufzeichnungsträger, auf dem ein Programm aufgezeichnet ist, das Anweisungen zur Ausführung des Verfahrens zum Sichern der Anonymität nach einem der Ansprüche 1 bis 9 aufweist, wenn das Programm von einem Prozessor ausgeführt wird.

## Claims

1. Method for safeguarding anonymity during a communication with a correspondent (202, 209), between a caller (201) and a user being called (202), the communication being of an anonymous nature, the method being **characterized in that** it comprises the following steps:
- upon receiving a response from the correspondent (202, 209) to the communication sent by the caller (201), putting on hold (103) the caller (201),
- simultaneously when the caller is put on hold, analysis (102) of the response received from the correspondent (202, 209), in order to determine (104) whether the correspondent (202, 209) corresponds to the voicemail (209) of the user being called (202),
- in the case of a positive determination, playing (105) to the caller (201) an anonymous welcome message (207) in which the identity of the user being called (202) is masked.

2. Method according to Claim 1 furthermore comprising the following steps:
- saving (106) a message left by the caller (201) in response to the anonymous welcome message,
- transmission (107) of an indication of the presence of a message left by the caller (201) to the user being called (202).

3. Method according to either of Claims 1 and 2, in which, when the correspondent (202, 209) has been determined as corresponding to the voicemail (209) of the user being called (202), the communication link between the caller (201) and the correspondent (202, 209) is interrupted.

4. Method according to any one of Claims 1 to 3, in which the putting on hold (103) of the caller (201) is implemented by sending to the caller (201) a succession of specific sounds or a specific on-hold message.

5. Method according to any one of the preceding claims in which the correspondence between the correspondent (202, 209) and the voicemail (209) of the user being called (202) is determined (104) by at least one of the following steps:
- identification of a DTMF code specific to the activation of a voicemail,
- comparison of at least a part of the response received from the correspondent with at least a part of a default welcome message of the voicemail from a telecommunications operator,
- transmission of an interactive message to the correspondent and comparison of the response to the interactive message received with an expected response.

6. Method according to one of the preceding claims in which the anonymous welcome message (207) is hosted on a server (208) distinct from the voicemail server (209) of the user being called (202).

7. Method according to any one of Claims 2 to 6 in which the indication of the presence of a message left by the caller (201) is communicated to the user being called (202) via a text message comprising a link allowing the message left by the caller (201) to be accessed.

8. Method according to any one of Claims 2 to 6 in which the message left by the caller (201) is transmitted to the voicemail server (209) of the user being called (202) by means of a call simulation mechanism.

9. Method according to any one of Claims 2 to 8 in which information indicating that the communication is anonymous is inserted into the message left by the caller (201) before transmission to the user being called (202).

10. Device for safeguarding the anonymity during a communication with a correspondent, between a caller (201) and a user being called (202), the communication having an anonymous nature, the device being **characterized in that** it comprises:
- means (204) for receiving a response from the correspondent (202, 209) to the communication sent by the caller (201),
- means (205) for putting the caller (201) on hold activated upon receiving the response from the correspondent,
- means (206) for analyzing the response received from the correspondent (202, 209), in order to determine whether the correspondent corresponds to the voicemail (209) of the user being called (202), the means of analysis being activated simultaneously when the caller is put on hold,
- means (201) for playing an anonymous welcome message to the caller (207) in which the identity of the user being called (202) is masked, the playing means being activated in the case of a positive determination.

11. Device according to Claim 10 comprising means (208, 203) for safeguarding a message left by the caller (201) in response to the anonymous welcome message and means (27) for transmission of an indication of the presence of a message left by the caller (201) to the user being called (202).

12. Server comprising a device according to either one of Claims 10 and 11.

13. terminal comprising a device according to Claim 10.

14. commuter program comprising instructions for the execution of the method for safeguarding anonymity according to any one of Claims 1 to 9, when the program is executed by a processor.

15. Recording medium readable by a processor on which is recorded a program comprising instructions for the execution of the method for safeguarding anonymity according to any one of Claims 1 to 9, when the program is executed by a processor.
